# EUROPEAN PATENT APPLICATION

(11) **EP 3 193 286 A1**
(43) Date of publication of application: **19.07.2017**
(21) Application number: 16151237.1
(22) Date of filing: 14.01.2016
(51) Int. Cl.: G06Q 10/00

(54) **PREVIEWING VISUAL CONTENT RELATING TO AN OBJECT FIELD**

(71) Applicant: Nokia Technologies Oy, 02610 Espoo (FI)
(72) Inventor: LEHTINIEMI, Arto, 33880 Lempäälä (FI)
(74) Representative: Nokia Corporation

(57) **Abstract**

Various example implementations of reviewing visual content relating to an object are described, including methods, apparatuses, and computer program products. For example, at least one method including, displaying a first scene of first digital file, the first scene includes a first object; receiving a first user input associating with the first object; displaying one or more other objects similar to the first object, wherein the one or more objects are from one or more digital files; receiving a second user input associating with a second object, which is one of the other objects similar to the first object; and displaying at least part of a second scene from a second digital file, which is one of the one or more digital files, wherein the second scene includes the second object.

## Description

### FIELD

The subject matter discussed herein relates generally to accessing digital media and, more particularly, to previewing visual content relating to an object.

### BACKGROUND

When a user accesses, e.g., views a digital file, such as an image, a video, a scene of a game, a virtual reality scene, etc., the user may have an interest in one or more objects in the digital file. For example, the user may be viewing a digital file that includes a car and have an interest in the car.

If the user wants to access or find more digital files that include a car (e.g., at least one car), the user would perform a search on a collection of digital files for a car if the user has access to a system or service that supports such search.

Otherwise, the user would need to open each digital file in a collection of digital files and visually see if a car is included in the digital file. If the digital file is a video, the user would need to view the entire video to find a car.

### SUMMARY

The subject matter includes example methods, apparatuses, devices, and computer program products. For example, at least one example method including, displaying a first scene of first digital file, the first scene includes a first object; receiving a first user input associating with the first object; displaying one or more other objects similar to the first object, wherein the one or more objects are from one or more digital files; receiving a second user input associating with a second object, which is one of the other objects similar to the first object; and displaying at least part of a second scene from a second digital file, which is one of the one or more digital files, wherein the second scene includes the second object

The example methods may be implemented one or more apparatuses, devices, and/or systems. An apparatus may implement an example methods using any means.

For example, an apparatus may include any means for displaying a first scene of first digital file, the first scene comprises a first object; any means for receiving a first user input associating with the first object; any means for displaying one or more other objects similar to the first object, wherein the one or more objects are from one or more digital files; any means for receiving a second user input associating with a second object, which is one of the other objects similar to the first object; and any means for displaying at least part of a second scene from a second digital file, which is one of the one or more digital files, wherein the second scene comprises the second object.

In some implementations, the first scene may be presented using a near-eye display, on a flat surface, on a curve surface, or on any combination thereof.

In some implementations, the first scene at least part of a frame of a video in panorama format that covers at least a portion of a circle.

In some implementations, the first scene at least part of a frame of a video in spherical format that covers at least a portion of a sphere.

In some implementations, the first digital file includes an immersive multimedia video.

In some implementations, the first scene is from a live source.

In some implementations, the first digital file and the other digital files are of one or more types.

In some implementations, the receiving the first user input associating with the first object includes receiving an input interacting with the first object after the first object has been identified by a user.

In some implementations, the first object may be identified by a user using hand gesture.

In some implementations, the displaying the one or more other objects similar to the first object includes displaying the first object and the other objects overlaid on the first scene.

In some implementations, the receiving the second user input associating with the second object includes receiving input controlling an indicator to move to the right or left of the second object; and at least part of a second scene is displayed to the right or left, respectively, of the second object.

In some implementations, the one or more digital files include the first digital file.

The example methods may be stored in computer-readable media (e.g., with instructions that, when performed by at least one processor, causes the example methods described herein to be performed.)

### BRIEF DESCRIPTION OF THE DRAWINGS

A description is now given, by way of example only, with reference to the accompanying drawings, in which:
FIG. 1A shows an example scene of a digital file.
FIG. 1B shows example devices that may be used to capture digital files.
FIG. 1C shows example objects in an example scene.
FIG. 1D shows example devices that may be used to access or view digital files.
FIG. 1E shows an example view of a digital file.
FIG. 2A shows example user interactions with an example scene of a digital file.
FIG. 2B shows example user interactions with an example scene of a digital file.
FIG. 3A shows example user interactions with an example scene of a digital file.
FIG. 3B shows example user interactions with an example scene of a digital file.
FIG. 4A shows example user interactions with one or more example scenes of a digital file.
FIG. 4B shows example user interactions with one or more example scenes of a digital file.
FIG. 5A shows example user interactions with one or more example scenes of a digital file.
FIG. 5B shows example user interactions with one or more example scenes of a digital file.
FIG. 6 shows an example of a process implementation.
FIG. 7 shows an example environment suitable for some example implementations.
FIG. 8 shows an example computing environment with example devices suitable for use in some example implementations.

### DETAILED DESCRIPTION

The subject matter described herein is taught by way of example implementations. Various details have been omitted for the sake of clarity and to avoid obscuring the subject matter. The examples shown below are directed to structures and/or functions for implementing previewing visual content relating to an object.

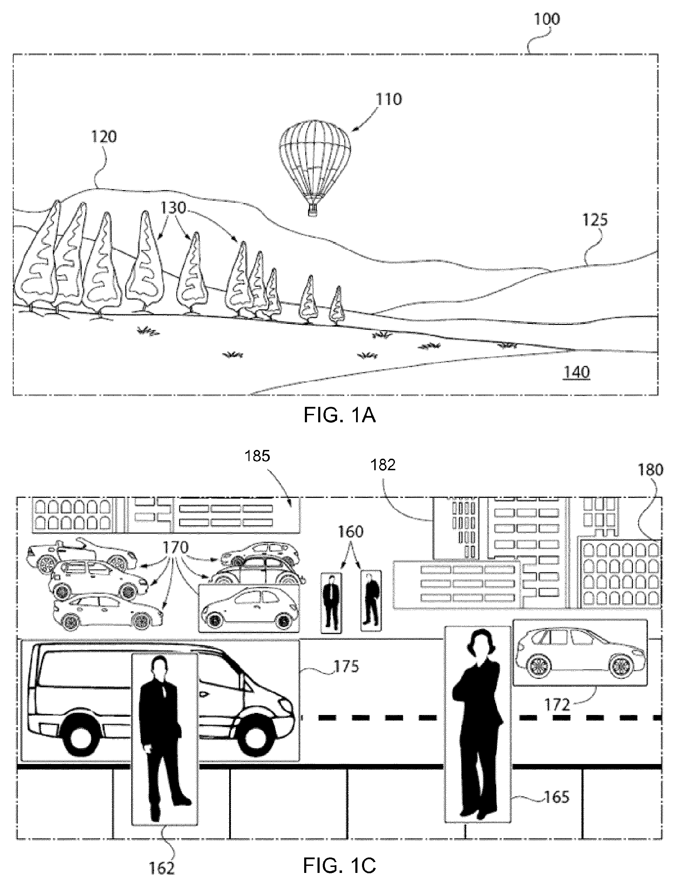

FIG. 1A shows an example scene 100 of a digital file. Scene 100 is a scene of, for example, a hot air balloon 110 flying over a natural scenery that includes mountains 120 and 125, trees 130, and a body of water 140. A user accessing or viewing scene 100 may be interested in one or more objects, such as hot air balloon 110 mountains 120 and 125, trees 130, and a body of water 140, such as a river, lake, pond, or ocean. For example, the user may be interested in the hot air balloon 110. The user may want to access or view other digital files with a similar object (e.g., view scenes in other digital files that include at least a hot air balloon).

Scene 100 may be from an existing digital file (e.g., a digital file that contains scene 100 stored in the storage). In some examples, scene 100 may be from a live source (e.g., provided live scenes as they are being captured, with some delay for transmission and/or processing of the scenes). A live source may be considered as a digital file as the live source provides a series of scenes as frames in a video.

As described further with some of the figures below, the user may select an object of interest (e.g., balloon 110). The user may provide input indicating an interest to see objects in other digital files and/or in other parts of the same digital file similar to balloon 110. In some implementations, at least some of the similar objects may be provided and/or presented to the user. The user may identify or select one of the similar objects then indicate an interest to access or view the surrounding scene in the digital file that included the selected similar object. In some implementations, at least part of the scene surrounding the selected similar object may be provided or presented to the user in various example fashions described below. For example, at least part of the scene surrounding the selected similar object may be overlaid on scene 100 (e.g., presenting over or on top of scene 100), showing at least part of scene 100 and least part of the scene surrounding the selected similar object at the same time. The user is able to interact with scene 100 and the scene surrounding the selected similar object, individually or at the same time.

This user is able to, in an intuitive way, access or view digital files around an object, person, and/or activity of interest with simple and/or intuitive interactions. If the user is accessing or viewing, for example, an immersive multimedia file or 360-degree digital file, the user is enable to maintain a holistic immersive experience and seamlessly switching between one immersive multimedia or 360-degree file to another based on one or more objects.

As used herein, the term "object" in a scene, in at least some examples, refers to any detectable, identifiable, recognizable, and/or selectable digital data that represents a logical collection separated from digital data surrounding the logical collection. For example, logical collections of digital data representing hot air balloon 110, mountains 120 and 125, trees 130, and a body of water 140 in scene 100 may be detectable, identifiable, and/or selectable separated from each other and from the background of scene 100. An object may be two-dimensional (2D) or three-dimensional (3D), and may include textual information.

As used herein, the term "digital file" in at least some examples refers to a file that includes at least one image, a video, text, audio data, sensory data, any combination thereof (e.g., multimedia data), immersive multimedia, or any digital content.

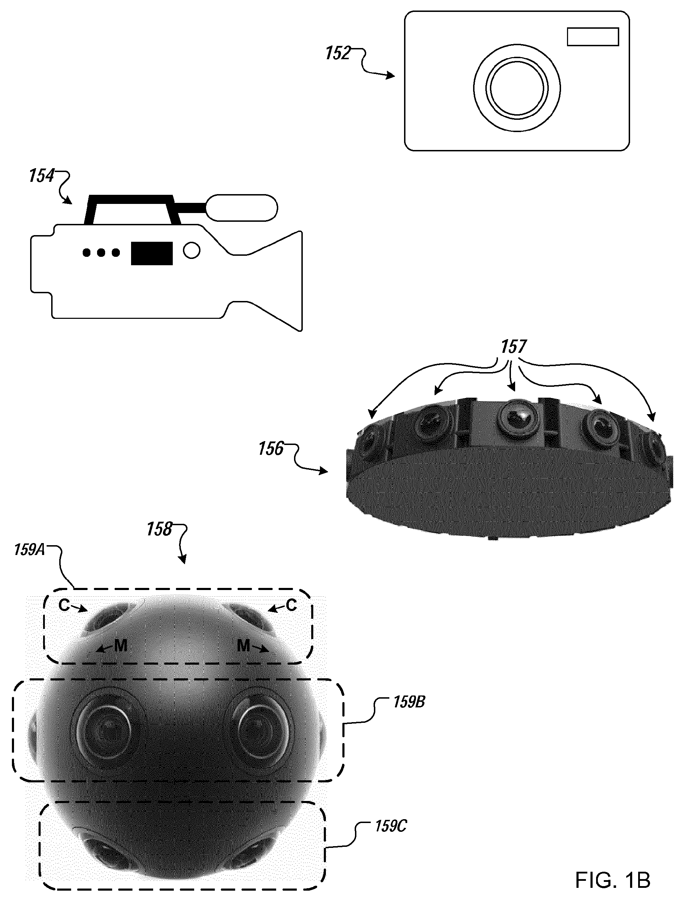

As used herein, the term "image" or "still image" in at least some examples refers to, in the context of visual data, a photograph, a game, a video, and the likes, a collection of digital data that include visual data at a particular instance in time the image was created or captured (e.g., if an image is captured using photography, the instance in time may be referred to as shutter speed, exposure time, or the length of time used to capture the image). An image may be an image in the format of a two-dimensional field of view (e.g., a photograph taken with a single lens); a panorama image (e.g., an image taken with two or more lenses arrange in a row, for example, any two or more lenses in a row of device 156 or 158, FIG. 1B; or an image, stitched together from two or more photographs, each taken with a single lens, that is bigger than the field of view of any single lens used); a 360-panorama or near-360 panorama image (e.g., a panorama image that captured, for example, using device 156 or 158, FIG. 1B, a 360-degree view or a view closed to 360 degrees); a partial spherical image (e.g., an image taken with three or more lenses, the center points of three of which lenses form a triangle, for example, using device 156 or 158, FIG. 1B); or a complete or near-complete spherical image (e.g., an image taken with three or more lenses that cover the inside of a complete or near-complete logical sphere, for example, using device 158 of FIG. 1B). An image in any format may include one or more objects representing in a two-dimensional space (e.g., a 2D object) and/or three-dimensional space (e.g., a 3D object).

As used herein, the term "field of view" in at least some examples refers to the extent of the observable and/or viewable portion of a scene that is visible to a user at a particular instance in time.

As used herein, the term "video" in at least some examples refers to a series of images in a period of time. The number of images, also referred to as frames, in a time interval may be based on one or more frame rates in terms of frames per second or images per second.

As used herein, the term "immersive multimedia" in at least some examples refers to a combination of multimedia data or elements (e.g., visual elements, textual elements, audio element, and/or sensory elements, etc.) representing, for example, an environment and/or experience that may be three dimensional, in a virtual reality, gaming, an augmented reality, an actual reality, and/or mixed reality (any combination of virtual, augmented, and or actual realities). Immersive multimedia may contain an image or sequence of images (e.g., immersive multimedia video).

As used herein, the term "immersive experience" in at least some examples refers to user experience that involves immersive multimedia.

As used herein, the term "scene" in at least some examples refers to an image, at least part of which is observable and/or visible to a user at a particular instance in time. When a scene is part of a video (e.g., having series of scenes, images, or frames), presenting, displaying, or running a scene refers to presenting, displaying, or running the video from the scene and successive scenes, images, or frames thereafter.

FIG. 1B shows example devices that may be used to capture, generate, or create digital files that include images and/or videos. Example devices may include devices 152 and 154 each with a single lens or capture images and/or videos using one of multiple lenses. Example device 156 includes two or more lenses 157 arranged in a row or on a plane. Device 156 may be used to capture single-lens images and/or videos and any forms of panorama images and/or videos using two or more lenses 157.

Device 158 may include lenses 159A - 159C arranged to capture single-lens images and/or videos, any forms of panorama images and/or videos (e.g., using two or more lenses 159B), and/or any forms of spherical images and/or videos using any combination of lenses.

Some images and/or video may be captured or generated with audio data and/or other data (e.g., textual data, metadata, etc.). Audio data may be captured with one or more microphones of the image capturing devices or included from another source. For example, device 158 may include one or more microphones for capturing audio. In the example shown, in box 159A, there are two cameras "C" two with corresponding microphones "M". Similarly, there may be one microphone near each of the lenses in box 159B and/or 159C. There may be more cameras and/or microphones in boxes 159A-C on the back side (e.g., the side not shown).

In some implementations, textual data, metadata, and/or other data may be generated by the image capturing devices (e.g., devices 152 - 156 and 158) and/or include from another source.

Other example devices (not shown, such as computers, smartphones, tablet devices, wearable devices, such as watches, bracelets, eyewear, rings, etc., that include or have access to at least one lens) may be used to capture images and/or audio, and/or generate textual data, metadata, and/or other data. In addition, devices without using any lens (not shown, such as computers) may be used to create, edit, store, transmit, or otherwise generate digital files or any content therein.

FIG. 1C shows example objects in an example scene. Example objects includes objects 160-165 having at least a portion of which in the shape of at least a part of a human (person objects, such as a face); and objects 170 - 185 with no portion in the shape of any part of a human (non-person objects). In some implementations, a person object may include identity information that identifies a particular person, such as Albert Einstein, the president of a particular country in a particular period of time, etc.

In some implementations, objects may include activity, such as dogs running, ants walking, elephants eating, persons fishing, etc.

One or more objects in a digital file may be pre-recognized (e.g., with metadata) or pre-processed. For example, before the digital file is accessed (e.g., for viewing, interacting, etc. by a user), the digital file may include data (e.g., metadata) that identifies or recognizes one or more objects, e.g., in each of one or more frames in a video. The digital file may be processed by one or more processors in one or more apparatus, devices, and/or systems at one or more times to determine, detect, identify, or recognize (collectively, "recognize") one or more objects. The pre-recognized and/or pre-processed objects may be stored and/or made available when the digital file is accessed. In some implementations, a digital file or portions thereof may be processed on the fly, on demand, or in real time when the digital file is accessed to recognize one or more objects (e.g., objects similar to a given object, such as balloon 110). In some implementations, objects in one or more digital files may be recognized using any combination of pre-recognized method, pre-processed method, and on-demand processed method.

In the pre-processed and/or on-demand processed methods, any one or more circuits, applications, algorithms, and/or techniques currently known and/or developed in the future may be used. For example, objects may be recognized using known algorithms and/or techniques in edge matching/detection, divide-and-conquer search, greyscale matching/detection, gradient matching/detection, interpretations trees, pose consistency, pose clustering, geometric hashing, scale-invariant feature transform, speeded up robust features, convolutional neural networks, deep convolutional neural networks, one or more other forms of convolutional neural networks, etc.

In some implementations, person objects may be recognized with identity information that identifies a particular person using, for example, any one or more facial recognition algorithms and/or techniques currently known and/or future developed.

For example, an object of interest selected by a user is a person object (e.g., person). If the person of interest's identity is not recognized, (I) similar objects based on the selected person object are any objects recognized as having the shape or partial shape of a person regardless of identities even if recognized. If the person of interest's identity (e.g., Albert Einstein) is recognized, (II) similar objects based on the person of interest, depending on implementations, may be only objects that are identified or recognized as that particular person (e.g., Albert Einstein). In some implementations, the user may be prompted to choose, when the person of interest's identity is recognized, whether the user wants (I), (II), or both (I) and (II).

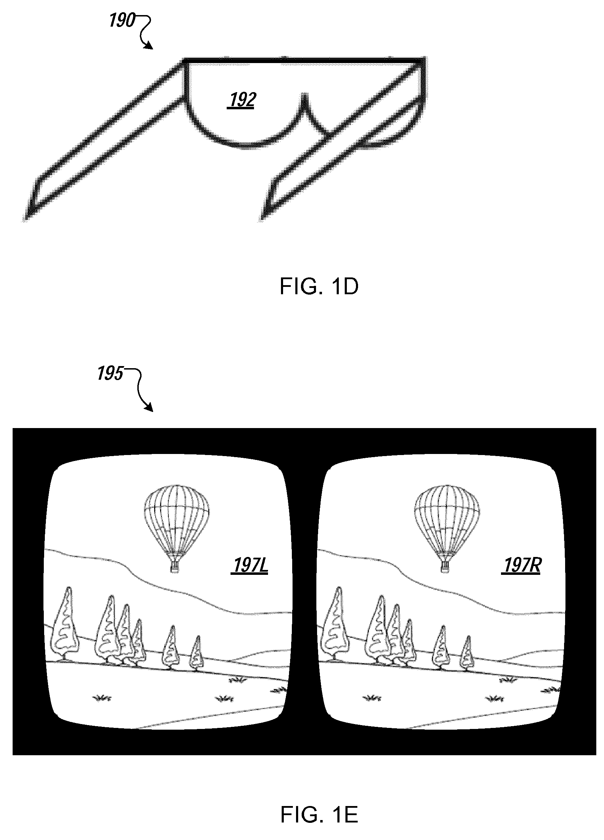

FIG. 1D shows example devices that may be used to access or view digital files. Example devices include near-eye display devices or apparatuses (e.g., device 190, head-mounted apparatuses, devices, glasses, spectacles for one or more eyes, goggles, etc.) and other devices (not shown), such as computers, smartphones, tablet devices, wearable devices, such as watches, bracelets, rings, etc., that include or have access to at least one display with a flat surface or a curve surface (curve with respect to one or more axes).

Not all content will benefit from a head-mounted display. For example, a flat image or 2D content can be view using a flat or curve display/surface that is not near the viewing user's eye. Some content, such as 3D, panorama, immersive content, etc., a near-eye display or head-mounted apparatus may provide additional benefits, such as enhancing user viewing experience.

Example device 190 in the form of head-mounted apparatus includes at least one display 192 that displays images to a user. The head-mounted apparatus is moved with the movement of the head of the user.

The head-mounted apparatus may be implemented with a see-through (e.g., transparent or semitransparent) arrangement that enables live view through the display 192 while a scene (e.g., scene 100) is displayed by the display 192 to the user to allow the user to see both the life view and scene 100. In some examples, display 192 displays scene 100 in only a portion of the user's view, such as at a corner of device 190. In some examples, device 190 does not include see-through view and the user cannot see a live view.

FIG. 1E shows an example view of a digital file. Head-mounted apparatus 195 is suited for viewing digital files with certain forms of content, such as 3D content, panorama content, partial spherical content, immersive multimedia, etc. Head-mounted apparatus 195 includes a left view 197L and a right view 197R. The left and right views 197L and 197R provide a stereoscopic view of a scene (e.g., scene 100) to a user that enhances the viewing experience and/or immerses the user into the content being accessed or viewed.

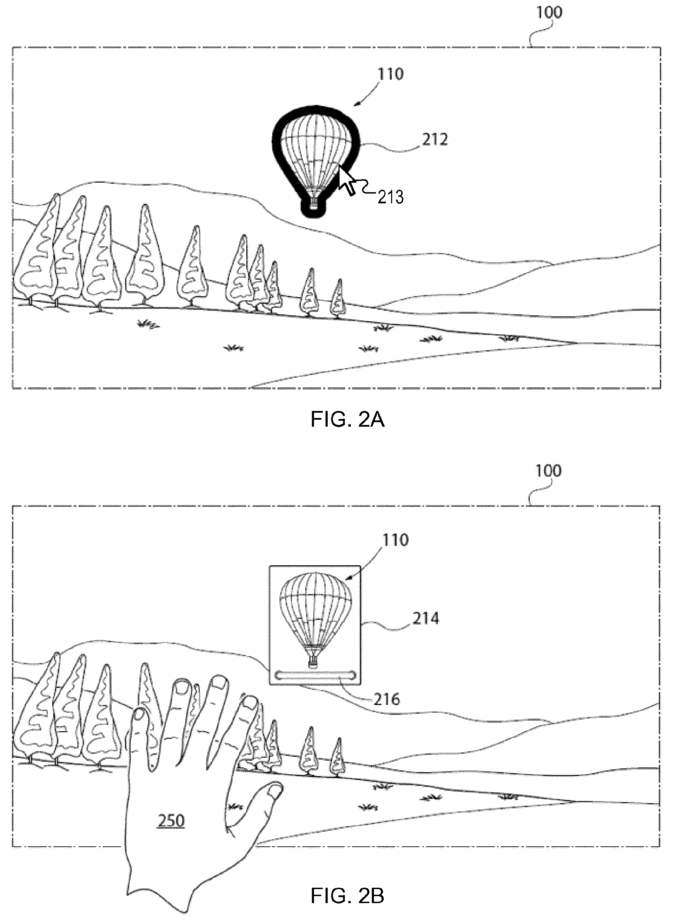

FIG. 2A shows example user interactions with an example scene of a digital file. A user viewing scene 100 may be interested in accessing, viewing, or previewing one or more other digital files with one or more objects similar to, for example, balloon 110.

Any user interface may be implemented to support user interactions, e.g., allow users to provide input described herein. For example, a user interface may include one or more input devices, such as a mouse, pointing device, touch pad, touch screen, or other hand-held input devices. Another example user interface may allow user to provide touchless hand gesture input or interaction. For example, in an immersive environment where a user may be using a headset (e.g., head-mounted apparatus 195, FIG. 1E), one or more cameras may be used to track hand gestures of the user. The cameras for tracking user input may be position near the headset and/or on the headset (e.g., in front and/or on the side of the headset).

The user may identify or select the object of interest (e.g., balloon 110) using a user interface. For example (not shown), the user may point an object or finger to or near balloon 110, touch on or near balloon 110, hover a hand or object over or near balloon 110, grab balloon 110, provide input describing balloon 110, draw a boundary (e.g., lasso) that covers at least part of balloon 110, etc.

As an example, as shown, a user interface may be provided with a pointer or cursor 213 for the user to interface with the device and/or system that presents scene 100. The user controls pointer 213 to select balloon 110. A visual indicator 212 may be provided or presented to indicate the selected balloon 110. The user has interaction opportunities at least based on the selected balloon 110.

FIG. 2B shows example user interactions with an example scene of a digital file. Herein after, hand gesture user interactions are described as an example of user interface regardless of the how digital files are being accessed or viewed. The user may provide input indicating an interest to see objects in other digital files and/or in other parts of the same digital file similar to balloon 110. For example, the user may interact with the object of interest (e.g., balloon 110), such as moving his or her hand 250 towards the direction of the object. The hand may be recognized, for example, using one or more cameras positioned near the user. In anticipation of user interactions (e.g., to indicate that interactions with balloon 110 is possible), or in response to detecting hand 250, visual indicator 216 is presented around, near, or on the object of interest. Visual indicator 216 may be any indicator in any shape or form (e.g., shown here as a drawer handle to indicate that it can be pulled or pushed). In some implementations, an object container 214 may be presented. An object container is a visual indicator that conceptually and visually encloses an object, such as balloon 110).

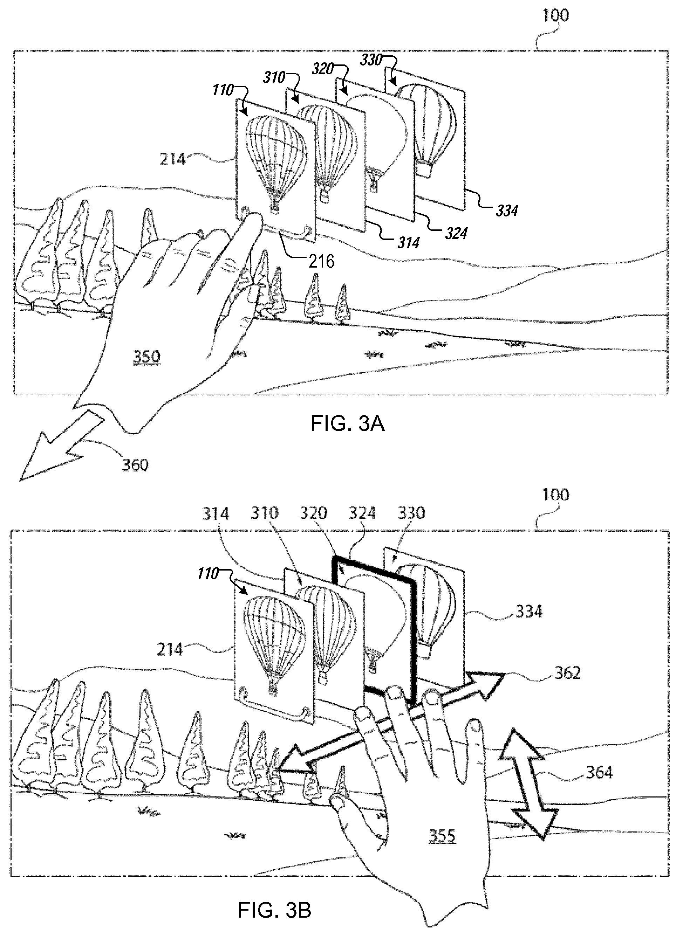

After the object of interest (e.g., balloon 110) is identified or selected, a collection of digital files may be analyzed to recognize similar objects (e.g., as described above). In some implementations, some or all of the processing or analysis may not take place until later (e.g., until the user actually interact with visual indicator 216, as shown in FIG. 3A below). The collection of digital files being analyzed may be digital files from one or more sources, that may be local and/or from the Internet. Examples of some local sources (e.g., sources not from the Internet) may be devices and/or storages that are accessible by the user. The local sources may be searched for similar objects using, for example, the object recognition and/or person recognition techniques described above. Examples of sources from the Internet are any websites, services, systems, devices, etc. that area accessible by the user. One or more search services or search engines may be searched for similar objects using any one techniques employed by these services and/or using for example, the object recognition and/or person recognition techniques described above.

For example, after balloon 110 is selected (or the indicator 216 is controlled in FIG. 3A), one or more devices and/or systems (e.g., some of those implemented for previewing visual content relating to an object and/or related devices and/or systems) analyze one or more digital files from each accessible source to determine, detect, identify, recognize, or search objects similar to the object of interest (e.g., balloon 110). The objects that are recognized to be similar to balloon 110 (also referred to as similar objects) and the corresponding digital files that contain the similar objects are remembered and/or gathered (e.g., store in memory the digital files or pointers to the digital files and the locations of the recognized objects).

Digital files from various sources may be referred to as a collection of digital files. In some implementations, the sources that contribute to a collection of digital files may be controlled (e.g., selected, expanded or limited) by the provided services, applications, and/or the user (e.g., using settings, such as search any/all, none, or only certain local sources; and/or search any/all, none, or only certain Internet sources, etc.). In some implementations, the types of digital files (e.g., video, panorama video, near-360 panorama video, 360-panorama video, partial spherical video, near-complete spherical video, complete spherical video, 3D video, multimedia video, immersive video, immersive multimedia video, and the image types of the various video types, etc.) may be controlled (e.g., selected, expanded or limited) by the provided services, applications, and/or the user (e.g., using settings that select, enable, and/or disable certain types of digital files).

As used herein, the term "similar" or "similar object" in comparison of two objects (e.g., object A and object B), in at least some examples, refers to the result returned by an application, device, system, service, website, or the like that has selected A based on B, or B based on A using any combination of one or more pre-recognized techniques (e.g., with metadata), pre-processed techniques, on-demand processed techniques as describe above, and Internet services. In some implementations, the provided services, applications, and/or the user may affect the results of similar objects by, for example, using settings or parameters that affect the technique or techniques being used. For example, the user may be allowed to set a degree of closeness of objects A and B to be recognized as similar. For examples, one degree of closeness to a hot air balloon 110, may be selecting objects in an oval or round shape with a basket (e.g., other hot air balloons). Another degree of closeness to a hot air balloon 110 may be selecting object in an oval or round shape (e.g., including party balloon, balls, etc.) Yet another degree of closeness may be any objects that appear to be suspended in the air (e.g., including flying objects of any shapes). The degree of closeness may be on a sliding scale (e.g., from more close/similar to less close/similar). The degree of closeness may be representing in other fashion, such as with checkboxes (e.g., with the above examples shown in three checkboxes), any combination of checkboxes may be selected by the user. Regardless of the degree of closeness, the selected objects or similar objects are selected based on a model or initial object (e.g., balloon 110). In some implementations, when searching for similar objects (e.g., similar to balloon 110), settings or parameters may be provided to the users, service providers, etc. to indicate whether a similar object must be a standalone object (e.g., another objects that looks like a balloon), or a similar object can be an group of two or more objects (e.g., two or more balloons together, 20 or 30 balloons together that are hard to separate, a balloon lifting a glider or being lifted by a helicopter, etc.).

FIG. 3A shows example user interactions with an example scene of a digital file. In some implementations, at least some of the similar objects may be provided and/or presented to the user. For example, the user may interact with indicator 216 using control indicator 350 in a motion 360 (e.g., similar to pulling out a drawer). The user may be using any input device or object, such as his or her hand; and a control indicator 350 (e.g., shown as a hand) may be presented on scene 100 to provide control feedback. In response to the user's input or motion, similar objects 310, 320, and 330 may be presented with balloon 110 (e.g., presented over or on top of scene 100). In some implementations, similar objects may be presented with a degree of opacity or transparency on top of scene 100 (e.g., allowing scene 100 to be seen through the similar objects).

Objects 110, 310, 320, and 330 may be 3D or presented in 3D. For example, one or more of objects 110, 310, 320, and 330 may be transformed, e.g., scaled, skewed, slanted, distorted, stretched, warped, rotated, or in any combination thereof., to give an appearance of the objects in a 3D space and/or to indicate that these objects can be interacted with.

Similar objects 310, 320, and 330 may be presented with object containers 314, 324, and 334, respectively, similar to object container 214 for balloon 110. The similar objects 310, 320, and 330 may contained in one or more other digital files. In some implementations, one or more of the similar objects 310, 320, and 330 may be identified or recognized from the same digital file that contains scene 100 and balloon 110.

Similar objects (e.g., objects 310, 320, and 330) may be presented in any order. For example, the order, which may be changed for any reasons, may be based on, but is not limited to, one or more factors, such as the degree of similarity of each of objects 310, 320, and 330 with balloon 110, relevance (e.g., to balloon 110, scene 100, and/or the digital file that contain balloon 110), matching (e.g., the overall scene 100 including balloon 110 with the overall scenes of objects 310, 320, and 330), time of capture, source of digital file, type of digital file, similarity of the activity (e.g., ballooning for leisure, farming, racing, reconnaissance, etc.).

FIG. 3B shows example user interactions with an example scene of a digital file. After similar objects (e.g., objects 310, 320, and 330) are presented and/or available for selection, the user may navigate or move control indicator 355 (e.g., shown as a hand) in any way, such as along paths 362 and 364. For example, the user may move along path 362 to identify or select one or more of the similar objects. For example, the user may select similar object 320, as shown with a bold object container 324.

If there are more similar objects than being able to present to the user at once (e.g., a setting may indicate present four objects at a time, including balloon 110), the user may move along path 364 to advance or change which similar objects to be presented (e.g., to bring out more similar objects). For example, in an intuitive way, the user may navigate control indicator 355 (or hand 355) closer to or further from the presented similar objects (e.g., objects 310, 320, and 330) along path 364. When hand 355 is closer to the presented object, moving hand 355 along path 362 may change the presented similar objects. For example, if hand 355 is moves in the direction from object 310 to object 330, one by one the presented similar objects disappear in the order from object 330 to object 310, and new similar objects appear behind balloon 110. If hand 355 is moved in the opposite direction, the disappearing and appearing of similar objects happen in the reverse direction.

In some implementations (not shown), the similar objects may be presented on or moved by the user to another location, window, or display to minimize overlaying scene 100 or certain portion of it.

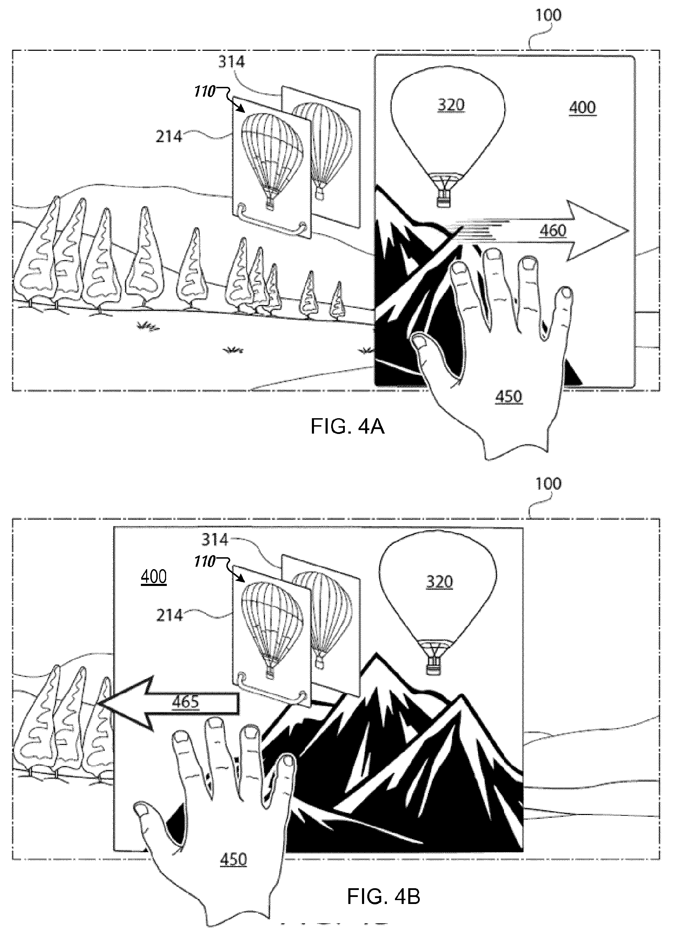

FIG. 4A shows example user interactions with one or more example scenes of a digital file.

After one or more similar objects are identified or selected, the user may want to access, view, or preview the scenes surrounding the selected similar objects. These scenes may be from different portions of the same digital file that contains scene 100 and/or from one or more different digital files. The different digital files and the digital file that contains scene 100 may be of one type or two or more types of digital files.

In this example, after the user selects the similar object 320, the user may overlay the content of the scene surrounding object 320 (e.g., scene 400) dynamically on top of scene 100 to view scene 400 around the object of interest (e.g., balloon 110). The user may indicate a desire to view at least a portion of scene 400 from a point that includes object 320 to the right of it with, for example, a swipe gesture or motion 460 using control indicator 450 (e.g., shown as a hand). The swipe gesture is just an example input. Other input formats and/or mechanisms (e.g., with an input device, a pointer device, and/or head motion, etc.) may be implemented.

Similarly, as shown in FIG. 4B, the user may indicate a desire to view at least a portion of scene 400 from object 320 to the left of it with, for example, a swipe gesture or motion 465 using control indicator 450. In some implementations (not shown), if a second similar object is selected (e.g., object 310, which is shown on the left of object 320 of scene 400), the user may indicate a desire to view object 310 and at least a portion of the scene surrounding object 310 from object 310 to the left of it with, for example, a swipe gesture or motion 465 using control indicator 450. The swipe gesture is just an example input. Other input formats and/or mechanisms (e.g., with an input device, a pointer device, and/or head motion, etc.) may be implemented.

After requesting the right portion of scene 400 to be presented in FIG. 4A, the user may request the left portion of scene 400 to also be presented with the right portion using, for example, a swipe gesture or motion 465 as shown in FIG. 4B. Similarly, after requesting the left portion of scene 400 to be presented in FIG. 4B, the user may request the right portion of scene 400 to also be presented with the left portion using, for example, a swipe gesture or motion 460 as shown in FIG. 4A.

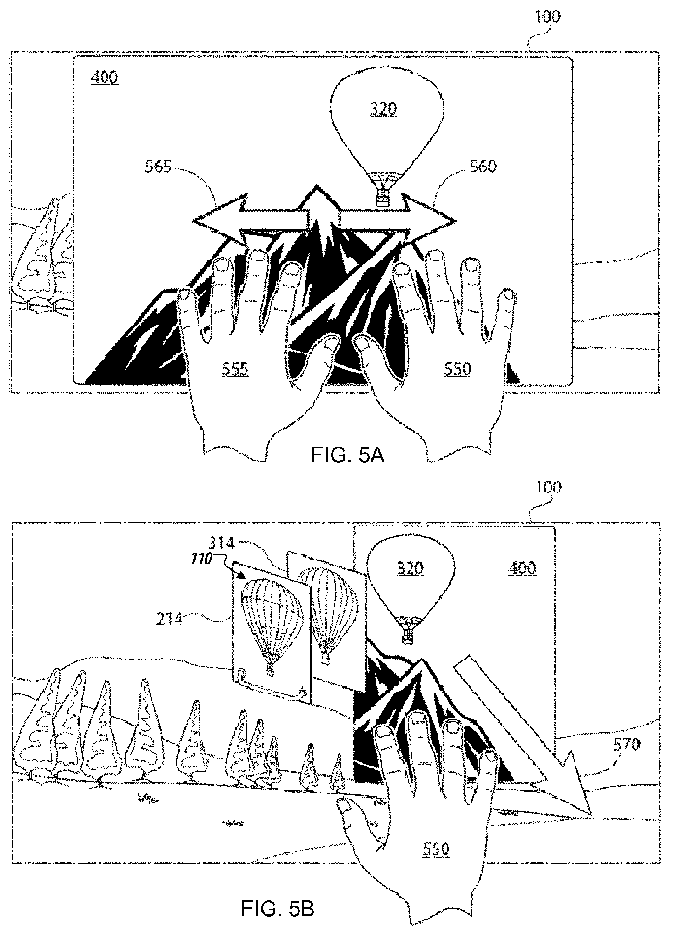

In some implementations, as shown in FIG. 5A, the user may indicate a desire to view at least a portion of scene 400 from object 320 to both sides of it with, for example, swipe gestures or motions 560 and 565 using control indicators 550 and 555 (e.g., shown as two hands). By using both hands, the user may expand the content of scent 400 to both directions simultaneously or sequentially (one motion after another).

Motion 460, motion 465, and motions 560 and 565 are just a few examples. Other motions (e.g., vertical, diagonal, or any combination of directions, etc.) may be implemented. Other sizes and shapes of windows and/or sub-windows (e.g., for scene 400 and other scenes) other than the examples shown in FIGs. 4A - 5 may be implemented.

In some implementations, motion 460 or 465, or the combination of motions 560 and 565 may expand scene 400 immersively, for example, to a full 360 view or at least partial spherical view in such viewing environment. Other implementations may allow the user to provide different input or inputs to request scene 400 or at least a portion thereof to be presented, such as using one motion (not shown) from left to right of right to left of object 320.

After part of scene 400 is presented, the user may leave it running (e.g., displaying the same image made up of scene 400 or, if scene 400 is part of a video, presenting successive frames of the video) simultaneously with the running of scene 100 (e.g., displaying the same image made up of scene 100 or presenting successive frames if scene 100 is part of another video or the same video). The user may be provided with a user interface to control scene 400 and scene 100, such as adjusting the size, location, position, etc. of scene 400 and/or 100.

At any time, the user may be allowed to request (e.g., with one or more user inputs) that scene 400 stop being presented. Other similar objects (e.g., objects 310 and/or 330) may be selected to request scenes surrounding those objects to be presented, as described with objects 320 and scene 400.

As described above as examples, the user may expand scene 400 (overlaying scene 100) to any direction from the object of interest (e.g., balloon 110) or from the selected similar object 320 to simultaneously view or preview what is happening in scene 400 and the successive frames if scene 400 is part of a video. The amount of overlay is fully user controllable and/or adjustable.

By default, if scene 400 is part of a video, the video on the opened segment (e.g., when scene 400 is being presented) starts playing from the first frame or moment that the object 320 is recognized in the video. In some implementations, scene 400 may be from a most meaningful moment based on the context of, for example, scene 100, activity of balloon 110, and/or other information. Any methods for skipping or advancing to scene 400 being the first scene or frame in a video may be implemented.

Scene 100 may include sound. Scene 400 may include sound. If scene 400 include spatial sound, the sound from the overlaid portion of scene 400 (e.g., the right portion shown in FIG 4A or the left portion shown in FIG. 4B) may be playing from the direction of the portion of scene 400 (e.g., from the right and left, respectively). The sound of scene 100 may be rendered outside the occupied sector used to render sound of the portion of scene 400.

In some implementations, the user may be provided with another control or user interface to browse through the similar objects, e.g., successively or continuously using the left hand to navigate and select the similar objects and using the right hand to expand the content or scene that contains the selected similar objects to preferred directions. In this case the user may have multiple overlapping scenes of different sizes open simultaneously. One hand (or a controller) may control switching between these scenes, each include a different similar object.

In some implementations, a scene (e.g., scene 400) and/or the similar object contained therein (e.g., object 320) may be presented with a degree of opacity or transparency on top of scene 100 (e.g., allowing scene 100 to be seen through the scene 400 and object 320).

FIG. 5B shows example user interactions with one or more example scenes of a digital file. In some implementations, the user may pull out, move, or resize scene 400 with object 320 to another location, position, window, or display. For example, scene 400 with object 320 and successive frames, if scene 400 is in a video, may be resized and moved to the bottom right corner of scene 100 as shown by arrow 570, covering or overlaying only a portion (e.g., a rectangle area) of scene 100. This arrangement may be referred to as a picture in picture arrangement (e.g., a smaller picture of scene 400 presented on or over a larger picture of scent 100). In some implementations, the picture in picture arrangement may be reversed. For example, scene 100 may be presented in a smaller area over scene 400.

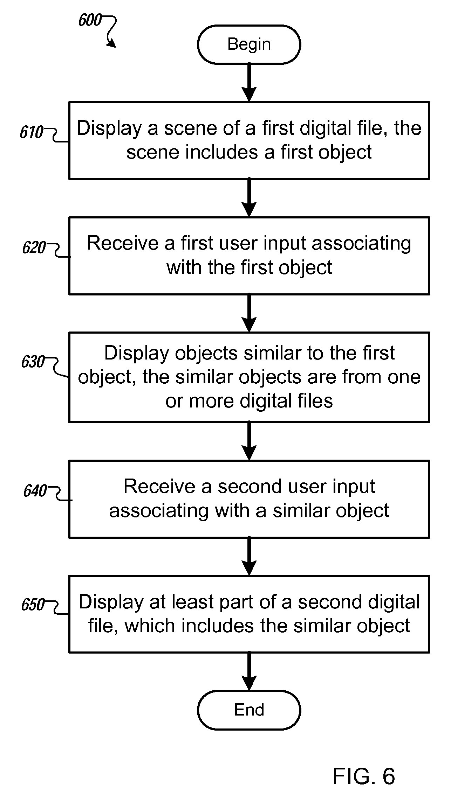

FIG. 6 shows an example of a process implementation. Process 600 includes, for example, block 610, a scene of first digital file is presented or displayed (e.g., in a display of a head-mounted apparatus), the scene includes at least a first object, as shown in FIG. 1A. At block 620, at least one first user input associating with the first object is received. For example, the user input may interact with the first object as described with respect to FIG. 2B. The first object may be identified or selected before the interaction. At block 630, one or more other objects similar to the first object are presented or displayed as shown in FIG. 3A or 3B. These objects, referred to as similar objects may be from one or more digital files, which may include the first digital file. At block 640, at least one second user input associating with one or more similar objects (one of which is referred to as a second object) is received. For example, the second user input may navigate the similar objects, reveal other similar objects (e.g., being presented or displayed), select one or more similar objects, etc. At block 650, at least a part of a second scene from a second digital file, which is one of the one or more digital files, is presented or displayed as shown in FIGs. 4A - 5B. The second scene includes the second object. For example, a user may provide input controlling an indicator to move to the right, left, or both right and left of the second object. The second scene or part thereof may be presented or displayed at least based on the user input.

In some examples, process 600 may be implemented with different, fewer, or more blocks. Process 600 may be implemented as computer executable instructions (computer program code), which can be stored on a medium, loaded onto one or more processors of one or more computing devices, and executed as a computer-implemented method.

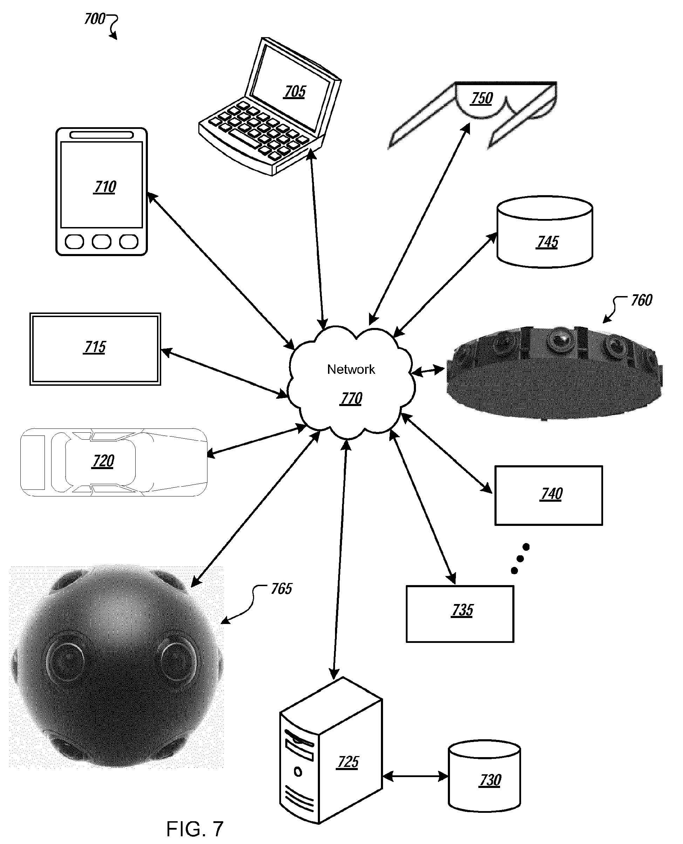

FIG. 7 shows an example environment suitable for some example implementations. Environment 700 includes, for example, devices 705-765, each may be communicatively connected to at least one other device via, for example, network 770 (e.g., by wired and/or wireless connections) and/or other networks (not shown, such as a cellular network). For example, different subsets of devices in environment 700 may be communicating, which can be simultaneously) using different networks and/or different communication protocols/standards. Some devices may be communicatively connected to one or more storage devices 730 and 745.

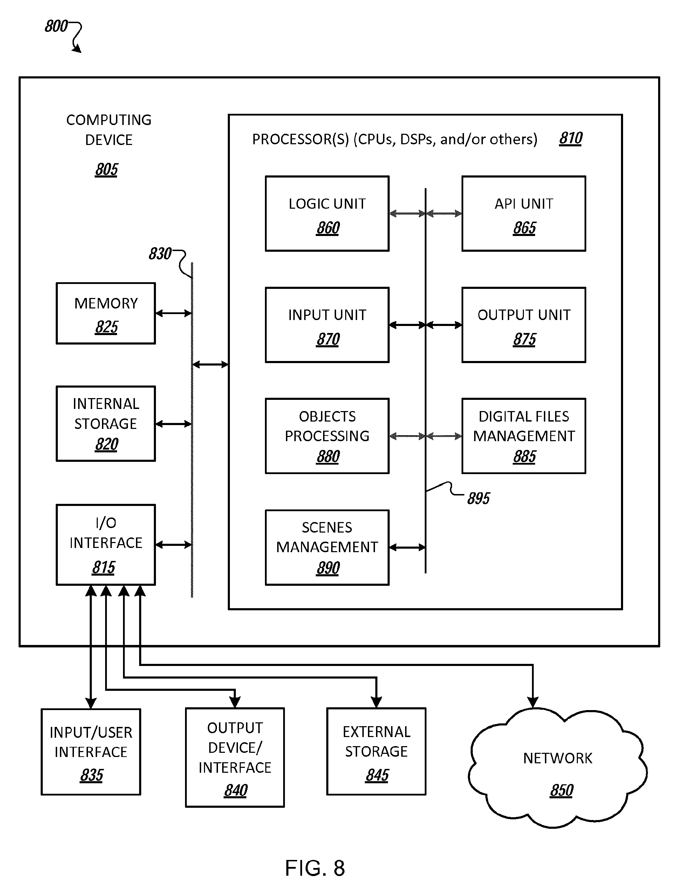

An example of one or more devices 705-745 may be computing device 805 described below in FIG. 8 or a variation of device 805 (e.g., not having some described components and/or having other components not described). Devices 705-745 may include for example, but are not limited to, a computer 705 (e.g., a laptop computing device), a mobile device 710 (e.g., smartphone or tablet), a television 715, a device associated with a vehicle 720, a server computer 725, computing devices 735-740, storage devices 730 and 745, near-eye display or head-mounted apparatus 750, and cameras 760 and 765. Note that devices 705-720 and 750 may include lenses or cameras. Other types of cameras, such as cameras 152 and 154, FIG. 1B, may also be used in environment 700.

In some implementations, devices 705-720 and 750-760 may be considered user apparatuses or devices (e.g., devices used by users to capture or create digital files and/or access or view digital files, such as via network 770). Network 770 can be any network or combination of networks (e.g., the Internet, local area network, wide area network, a telephonic network, a cellular network, satellite network, and the like). Apparatuses or devices 725-745 may be associated with service providers (e.g., used by service providers to provide services and/or store data, such as digital files and/or information thereabout).

For example, a user (e.g., Bob, a photographer or videographer) may capture digital content (e.g., digital files) using, for example, devices 760, 765, and store the digital files on a cloud service provider, which may be using servers 725 and storage devices 730 and/or 745. Another user (e.g., Nikki) may access and/or view digital files using television 715 or head-mounted apparatus 750, and one or more digital files may be provided by a service provider, which employ one or more devices 725-745.

FIG. 8 shows an example computing environment with example apparatus and/or devices suitable for use in some example implementations. Computing device 805 in computing environment 800 can include one or more processing units, cores, or processors 810 (processing means), memory 825 (e.g., RAM, ROM, and/or the like; memory means), internal storage 820 (e.g., magnetic, optical, solid state storage, and/or organic; storage means), and/or I/O interface 815 (I/O means), any of which can be coupled on a communication mechanism or bus 830 for communicating information or embedded in the computing device 805.

Computing device 805 can be communicatively coupled to input/user interface 835 (input means) and output device/interface 840 (output means). Either one or both of input/user interface 835 and output device/interface 840 can be a wired or wireless interface and can be detachable. Input/user interface 835 may include any device, component, sensor, or interface, physical or virtual, that can be used to provide input (e.g., buttons, touch-screen interface, keyboard, a pointing/cursor control, microphone, camera with one or more lenses, braille, motion sensor, optical reader, and the like). Output device/interface 840 may include a display, television, monitor, printer, speaker, braille, near-eye display, head-mounted display, and the like. In some example implementations, input/user interface 835 and output device/interface 840 can be embedded with, physically coupled to, or communicatively connected to the computing device 805. In other example implementations, other computing apparatuses or devices may function as or provide the functions of input/user interface 835 and output device/interface 840 for a computing device 805.

Examples of computing device 805 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like). Addition examples may be some or all the example devices shown in FIG. 6, where each device may include some, all, and/or different components described with computing device 805.

Computing device 805 can be communicatively coupled (e.g., via I/O interface 815) to external storage 845 (storage means) and network 850 (network means) for communicating with any number of networked components, devices, and systems, including one or more computing devices of the same or different configuration. Computing device 805 or any connected computing device can be functioning as, providing services of, or referred to as a server, client, thin server, general machine, special-purpose machine, or another label.

The I/O interface 815 may include wireless communication components (not shown) that facilitate wireless communication over a voice and/or over a data network. The wireless communication components may include an antenna system with one or more antennae, a radio system, a baseband system, or any combination thereof. Radio frequency (RF) signals may be transmitted and received over the air by the antenna system under the management of the radio system.

I/O interface 815 can include, but is not limited to, wired and/or wireless interfaces using any communication or I/O protocols or standards (e.g., Ethernet, 802.11x, Universal System Bus, WiMax, Bluetooth, modem protocols, cellular network protocols, and the like) for communicating information to and/or from at least some of the connected components, devices, and network in computing environment 800. Network 850 can be any network or combination of networks (e.g., the Internet, local area network, wide area network, a telephonic network, a cellular network, satellite network, and the like).

Computing device 805 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks, tapes, etc.), optical media (e.g., CD ROM, digital video disks, Blu-ray disks, etc.), solid state media (e.g., RAM, ROM, flash memory, solid-state storage, etc.), other non-volatile storage or memory, and the like.

Computing device 805 can be used to implement techniques, methods, applications, processes, or computer executable instructions (or program code). Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 810 can execute under any operating system (OS) (not shown), in a native or virtual environment. One or more applications can be deployed that include logic unit 860, application programming interface (API) unit 865, input unit 870, output unit 875, objects processing 880, digital files management 885, scenes management 890, and inter-unit communication mechanism 895 for the different units to communicate with each other, with the OS, and with other devices and/or applications (not shown). Collectively, the example units 860 - 895 may be provided in one or more processors, one or more apparatus, one of more devices, etc. At least some of the units 860 - 895, e.g., objects processing 880, digital files management 885, and scenes management 890, may implement one or more processes described with respect to FIGs. 1A to 7 (e.g., FIG. 6). The described units 860 - 895 and elements can be varied in design, function, configuration, or implementation and are not limited to the descriptions provided.

In some example implementations, when information or an execution instruction is received by API unit 865, it may be communicated to one or more other units (e.g., logic unit 860, input unit 870, output unit 875, objects processing 880, digital files management 885, and scenes management 890). For example, after input unit 870 has detected a user indication associating with an object of interest (e.g., balloon 110), input unit 870 may use API unit 865 to communicate the user indication to objects processing 880. objects processing 880 may, via API unit 865, interact with the digital files management 885 to analyze digital files to recognize objects similar to balloon 110. Using API unit 865, objects processing 880 may interact with scenes management 890 to provide scenes based on certain objects. When objects, scenes, or content of digital files are to be provided to a user, objects processing 880, digital files management 885, and scenes management 890 may interact with each other and with output unit 875 to cause the objects, scenes, or content to be presented or displayed.

In some instances, logic unit 860 may be configured to control the information flow among the units and/or direct the services provided by API unit 865, input unit 870, output unit 875, objects processing 880, digital files management 885, and scenes management 890 in some example implementations described above. For example, the flow of one or more processes or implementations may be controlled by logic unit 860 alone or in conjunction with, for example, API unit 865.

Any of the software components described herein may take a variety of forms. For example, a component may be a stand-alone software package, or it may be a software package incorporated as a "tool" in a larger software product. It may be downloadable from a network, for example, a website, as a stand-alone product or as an add-in package for installation in an existing software application. It may also be available as a client-server software application, as a web-enabled software application, and/or as a mobile application.

Any means-plus-function clause, if recited in any claims, are intended to cover any means capable of performing the recited function. The structures described herein serve as examples of the means for performing the recited function.

Although a few example implementations have been shown and described, these example implementations are provided to convey the subject matter described herein to people who are familiar with this field. It should be understood that the subject matter described herein may be implemented in various forms without being limited to the described example implementations. The subject matter described herein can be practiced without those specifically defined or described matters or with other or different elements or matters not described. It will be appreciated by those familiar with this field that changes may be made in these example implementations without departing from the subject matter described herein as defined in the appended claims and their equivalents.

## Claims

1. A method, comprising:
displaying a first scene of first digital file, the first scene comprises a first object;
receiving a first user input associating with the first object;
displaying one or more other objects selected based on the first object, wherein the one or more other objects are from one or more digital files;
receiving a second user input associating with a second object, which is one of the other objects selected based on the first object; and
displaying at least part of a second scene from a second digital file, which is one of the one or more digital files, wherein the second scene comprises the second object.

2. The method of claim 1, wherein the first scene is presented using a near-eye display or a head-mounted apparatus.

3. The method of claim 1 or 2, wherein the first scene comprises a frame of a video in panorama format that covers at least a portion of a circle.

4. The method of claim 1 or 2, wherein the first scene comprises a frame of a video in spherical format that covers at least a portion of a sphere.

5. The method of any of the preceding claims, wherein the first digital file is an immersive multimedia video.

6. The method of any of the preceding claims, wherein the first scene is from a live source.

7. The method of any of the preceding claims, wherein the first digital file and the other digital files are of one or more types.

8. The method of any of the preceding claims, wherein the receiving the first user input associating with the first object comprising receiving an input interacting with the first object after the first object has been identified by a user.

9. The method of any of the preceding claims, wherein the first object is identified by a user using hand gesture.

10. The method of any of the preceding claims, wherein the displaying the one or more other objects similar to the first object comprises displaying the first object and the other objects overlaid on the first scene.

11. The method of any of the preceding claims, wherein the receiving the second user input associating with the second object comprising receiving input controlling an indicator to move in a direction from the second object; and wherein the at least part of a second scene comprises the second object and a portion of the second scene to the direction from the second object.

12. The method of any of the preceding claims, wherein the one or more digital files comprise the first digital file.

13. Computer-readable medium encoded with instructions that, when performed by at least one processor, causes the method of any of the preceding claims to be performed.

14. An apparatus, comprising:
means for displaying a first scene of first digital file, the first scene comprises a first object;
means for receiving a first user input associating with the first object;
means for displaying one or more other objects similar to the first object, wherein the one or more objects are from one or more digital files;
means for receiving a second user input associating with a second object, which is one of the other objects similar to the first object; and
means for displaying at least part of a second scene from a second digital file, which is one of the one or more digital files, wherein the second scene comprises the second object.

15. The apparatus as claimed in claim 14, further comprising means for performing the method as claimed in any of claims 2 to 12.
